# EUROPÄISCHE PATENTSCHRIFT

(11) **EP 3 074 727 B1**
(45) Veröffentlichungstag und Bekanntmachung des Hinweises auf die Patenterteilung: **15.08.2018**
(21) Anmeldenummer: 14793060.6
(22) Anmeldetag: 27.10.2014
(51) Int. Cl.: G01D 5/26, G01D 5/353, F16H 59/10

(54) **VERFAHREN UND VORRICHTUNG ZUM BESTIMMEN EINER SIGNALÜBERTRAGUNGSQUALITÄT EINER LICHTÜBERTRAGUNGSSTRECKE**
METHOD AND APPARATUS FOR DETERMINING A SIGNAL TRANSMISSION QUALITY OF A LIGHT TRANSMISSION PATH
PROCÉDÉ ET DISPOSITIF DE DÉTERMINATION D'UNE QUALITÉ DE TRANSMISSION DE SIGNAUX D'UNE VOIE DE TRANSMISSION DE LUMIÈRE

(30) Priorität: 27.11.2013 DE 102013224258
(43) Veröffentlichungstag der Anmeldung: 05.10.2016
(73) Patentinhaber: Lemförder-Electronic GmbH, 32339 Espelkamp (DE)
(72) Erfinder: ERDMANN, Thomas, 32351 Stemwede (DE); JAHN, Jorg, 32257 Bünde (DE)
(74) Vertreter: Riegel, Werner
(86) Internationale Anmeldenummer: PCT/EP2014/072942
(87) Internationale Veröffentlichungsnummer: WO 2015/078640

(56) Entgegenhaltungen:
- EP-A1- 2 490 045
- EP-A2- 1 271 809
- EP-A4- 2 660 091
- EP-B1- 0 913 940
- DE-A1-102008 009 180
- DE-C1- 19 510 304

## Beschreibung

Die vorliegende Erfindung bezieht sich auf ein Verfahren zum Bestimmen einer Signalübertragungsqualität einer Lichtübertragungsstrecke sowie auf eine entsprechende Vorrichtung.

Automatikwahlhebel heutiger Fahrzeuge weisen typischerweise berührungslose Hall-Sensoren zur Messung von Positionen des Automatikwahlhebels auf. Dafür werden in der Regel teure Magnete und digitale oder analoge Hall-ICs verwendet. Um die Funktion solcher Applikationen abzusichern, werden bei der Entwicklung oft aufwendige Simulationsverfahren und Tests durchgeführt. Beispielsweise kann die Funktion durch magnetische Fremdfelder beeinflusst sein.

Lichtschranken werden in heutigen Fahrzeugen nur in eingeschränktem Maße verwendet. Beispielsweise werden in der EP 0 913 940 B1 und der EP 2 660 091 solche Vorrichtungen gezeigt. Üblich sind etwa Drehwahlschalter oder Lenkwinkelsensoren, die nach dem Lichtschrankenprinzip arbeiten. Dies liegt im Wesentlichen daran, dass Umwelteinflüsse wie Verschmutzung oder Betauung die Verwendung von Lichtschranken in Fahrzeugen erschweren können. Beispielsweise können Lichtschranken nicht mit Vergussmassen abgedichtet werden. Ein weiterer Grund für die eingeschränkte Verwendbarkeit besteht darin, dass alle Elektronikbauteile kosteneffizient auf einer ebenen Elektronikplatine untergebracht werden sollten. Dadurch sind die Freiheitsgrade für eine optimale Positionierung der Lichtschranken im Mechatroniksystem reduziert. Weiterhin sind speziell in Schalter- oder Gangwahlapplikationen oftmals Störquellen in Form von Ausleuchtungs-LEDs vorhanden.

In industriellen Anwendungen hingegen sind Lichtschranken sehr geläufig. Dort werden etwa Filtertechniken für bestimmte Lichtfrequenzen, gepulstes Licht oder Kombinationen aus beiden Verfahren eingesetzt, um Umgebungseinflüsse zu eliminieren. Die DE 195 10 304 C1, DE 10 2008 009 180 A1, die DE 10 2011 000 857 A1 und die DE 39 39 191 A1 beschreiben herkömmliche Lichtschrankenvorrichtungen. Allerdings haben diese Verfahren hinsichtlich einer Anwen dung in Fahrzeugen den Nachteil, dass nicht alle Fremdeinflüsse hinreichend sicher erkennbar sind oder ein hoher Aufwand erforderlich sein kann, der sich nicht kosteneffizient darstellen lässt. Lichtschranken können beispielsweise durch Streulicht beeinflusst sein. Beim Betrieb mehrerer Sender oder Lichtquellen wie etwa Ausleuchtungs-LEDs kann das Streulicht unerkannt auf einen Empfänger einwirken. Das Streulicht kann beispielsweise durch eine Betauung des Senders entstehen, wodurch das Licht des Senders diffus abgestrahlt wird.

Vor diesem Hintergrund schafft die vorliegende Erfindung ein verbessertes Verfahren und eine verbesserte Vorrichtung zum Bestimmen einer Signalübertragungsqualität einer Lichtübertragungsstrecke gemäß den Hauptansprüchen. Vorteilhafte Ausgestaltungen ergeben sich aus den Unteransprüchen und der nachfolgenden Beschreibung.

Ein Verfahren zum Bestimmen einer Signalübertragungsqualität einer Lichtübertragungsstrecke, die an ihrem einen Ende einen Lichtsender und an ihrem anderen Ende einen Lichtempfänger aufweist, umfasst folgende Schritte:
Empfangen eines Sendercodes, wobei der Sendercode ein von dem Lichtsender an den Lichtempfänger gesendetes Signal repräsentiert;
Einlesen eines Empfängercodes, wobei der Empfängercode ein von dem Lichtempfänger unter Verwendung des Sendercodes bereitgestelltes Signal repräsentiert; und
Ermitteln der Anzahl der übereinstimmenden Codeabschnitte des Sendercodes und des Empfängercodes, um die Signalübertragungsqualität der Lichtübertragungsstrecke zu bestimmen.

Unter einer Signalübertragungsqualität kann eine Größe verstanden werden, die angibt, mit welcher Genauigkeit ein Signal von einem Sender an einen Empfänger übertragen wurde. Je höher ein Grad einer Übereinstimmung des gesendeten Signals und des empfangenen Signals ist, desto besser kann die Signalübertragungsqualität sein. Unter einer Lichtübertragungsstrecke kann eine Wegstrecke eines Lichtstrahls verstanden werden. Der Lichtstrahl kann ein- oder mehrfach reflektiert sein, um über die Lichtübertragungsstrecke zu passieren. Beispielsweise kann es sich bei der Lichtübertragungsstrecke um einen Lichtweg einer Lichtschranke handeln. Der Lichtstrahl kann von einem Lichtsender über die Lichtübertragungsstrecke an einen Lichtempfänger übertragen werden. Hierbei repräsentiert der Lichtsender ein Ende der Lichtübertragungsstrecke und der Lichtempfänger ein anderes Ende der Lichtübertragungsstrecke. Unter einem Lichtsender kann ein elektrisches Bauelement verstanden werden, das ausgebildet ist, um elektrische Signale in Licht umzuwandeln. Beispielsweise kann es sich dabei um eine Leuchtdiode, auch LED (Light Emitting Diode) genannt, handeln. Unter einem Lichtempfänger, auch Fotoempfänger genannt, kann ein Sensor verstanden werden, der ausgebildet ist, um Licht in elektrische Signale umzuwandeln. Hierbei kann es sich beispielsweise um eine Fotodiode handeln.

Der Lichtsender ist ausgebildet, um einen Sendercode zu senden. Unter einem Sendercode kann ein Code verstanden werden, der in Form eines Lichtstrahls wie etwa Licht im roten Wellenlängenbereich (Rotlicht) oder Infrarotlicht an den Lichtempfänger gesendet werden kann. Bei dem Code kann es sich beispielsweise um ein digitales Codewort mit einer bestimmten Bitfolge handeln, mittels dem die Intensität des Lichts variiert wird. Der Lichtempfänger ist ausgebildet, um den Sendercode zu empfangen. Ferner kann der Lichtempfänger ausgebildet sein, um unter Verwendung des Sendercodes einen Empfängercode bereitzustellen. Bei dem Empfängercode kann es sich um ein elektrisches Signal handeln, das den Sendercode repräsentiert, sofern im Lichtempfänger ein den Sendercode tragendes Lichtsignal empfangen wurde. Der Sendercode und der Empfängercode werden miteinander verglichen. Dabei wird ein Grad einer Übereinstimmung des Sendercodes und des Empfängercodes ermittelt. Hierbei wird ermittelt, wie viele jeweilige Codeabschnitte des Sendercodes und des Empfängercodes miteinander übereinstimmen. Unter einem Grad einer Übereinstimmung wird eine Anzahl der übereinstimmenden Codeabschnitte verstanden. In Abhängigkeit von der Anzahl der übereinstimmenden Codeabschnitte kann die Signalübertragungsqualität der Lichtübertragungsstrecke bestimmt werden. Eine vollständige Übereinstimmung des Sender- und des Empfängercodes kann etwa einer bestmöglichen Signalübertragungsqualität entsprechen.

Dem vorliegenden Ansatz liegt die Erkenntnis zugrunde, dass eine Lichtschranke durch äußere Einflüsse in ihrer Funktion eingeschränkt sein kann. Beispielsweise kann sich Schmutz oder Tau auf einem Lichtsender und/oder einem Lichtempfänger der Lichtschranke absetzen. Dadurch kann ein von dem Lichtsender ausgesendeter Lichtstrahl unter einem veränderten Winkel abgestrahlt werden bzw. der Lichtempfänger kann nur einen Teil des ausgesendeten Lichtstrahls detektieren. Dies kann zu einer Fehlfunktion oder einem Ausfall der Lichtschranke führen. Um solche durch äußere Einflüsse verursachten Störungen zu vermeiden, ist der Lichtsender ausgebildet, um einen Code zu senden. Der Lichtempfänger ist ausgebildet, um den Code zu empfangen. Indem nun der gesendete Code mit dem empfangenen Code verglichen wird, kann festgestellt werden, ob die Lichtübertragungsstrecke durch Fremdeinflüsse beeinträchtigt ist. Dies kann insbesondere dann der Fall sein, wenn beide Codes voneinander abweichen, beispielsweise weil ein Teil des Lichts, welches den gesendeten Code trägt, bei der Übertragung durch unerwünschte Abstrahlungen nicht auf den Empfänger trifft.

Der vorliegende Ansatz bietet den Vorteil, dass mit technisch einfachen und sehr kostengünstig zu realisierenden Hilfsmitteln Fremdeinflüsse, die die Funktion einer Lichtschranke beeinträchtigen können, zuverlässig erkannt werden können. Aufgrund der dadurch erhöhten Betriebssicherheit kann eine solche Lichtschranke auch in Fahrzeugen kostensparend eingesetzt werden, beispielsweise für eine Bestimmung einer Position eines Gangwahlhebels eines Automatik-Kraftfahrzeuggetriebes in einem Gehäuse.

Gemäß einer Ausführungsform des vorliegenden Ansatzes kann das Verfahren einen Schritt des Messens einer Empfängercodesignalstärke eines den Empfängercode tragenden Signals umfassen. Ferner kann das Verfahren hierbei einen Schritt des Bestimmens einer Abweichung der Empfängercodesignalstärke von einem vorbestimmten Wert umfassen. Unter einer Empfängercodesignalstärke kann ein Pegel des den Empfängercode tragenden Signals verstanden werden. Bei dem den Empfängercode tragenden Signal kann es sich beispielsweise um ein analoges Signal handeln. Unter einem vorbestimmten Wert kann ein abgespeicherter Referenzwert der Empfängercodesignalstärke verstanden werden. Die Empfängercodesignalstärke kann mit dem vorbestimmten Wert verglichen werden, um eine Abweichung der Empfängercodesignalstärke von dem vorbestimmten Wert zu bestimmen. Beispielsweise kann der vorbestimmte Wert eine Mindestsignalstärke des den Empfängercode tragenden Signals repräsentieren. Die Empfängercodesignalstärke kann von einer physikalischen Beschaffenheit der Lichtübertragungsstrecke beeinflusst sein. Durch das Messen der Empfängercodesignalstärke und das Bestimmen der Abweichung der Empfängercodesignalstärke von dem vorbestimmten Wert kann festgestellt werden, ob ein den Sendercode tragendes Signal mit der Mindestsignalstärke an den Lichtempfänger gesendet wurde, damit der Lichtempfänger unter Verwendung des den Sendercode tragenden Signals unabhängig von der physikalischen Beschaffenheit der Lichtübertragungsstrecke das den Empfängercode tragende Signal bereitstellen kann. Das Bestimmen einer solchen Abweichung kann auch bei Fehlerdiagnosen hilfreich sein.

Gemäß einer Ausführungsform des vorliegenden Ansatzes kann das Verfahren einen Schritt des Veränderns einer Sendercodesignalstärke eines den Sendercode tragenden Signals unter Verwendung der Abweichung der Empfängercodesignalstärke von dem vorbestimmten Wert umfassen. Unter einer Sendercodesignalstärke kann ein Pegel des den Sendercode tragenden Signals verstanden werden. Bei dem den Sendercode tragenden Signal kann es sich beispielsweise um ein optisches Signal wie etwa Licht im roten Wellenlängenbereich oder Infrarotlicht handeln. Weicht die Empfängercodesignalstärke von dem vorbestimmten Wert ab, beispielsweise aufgrund einer Betauung oder Verschmutzung des Lichtsenders und/oder Lichtempfängers, so kann die Sendercodesignalstärke etwa durch eine Erhöhung einer Sendeleistung des Lichtsenders erhöht werden. Dadurch kann erreicht werden, dass das den Sendercode tragende Signal auch dann den Lichtempfänger erreicht, wenn die Lichtübertragungsstrecke zwar freigegeben, aber durch unerwünschte Fremdeinflüsse beeinträchtigt ist. Ferner bietet das Verändern der Sendercodesignalstärke den Vorteil, dass eine Beeinträchtigung der Lichtübertragungsstrecke zumindest teilweise beseitigt werden kann, etwa indem durch eine erhöhte Abwärme des Lichtsenders eine Betauung des Lichtsenders reduziert wird.

Gemäß einer Ausführungsform des vorliegenden Ansatzes können im Schritt des Veränderns zumindest zwei unterschiedliche Maßnahmen durchgeführt werden, um die Sendercodesignalstärke zu verändern. Beispielsweise kann die Sendercodesignalstärke verändert werden, indem der Lichtsender, etwa eine LED, über zumindest zwei unterschiedlich starke Vorwiderstände bestromt wird und/oder ein zusätzlicher Lichtsender zugeschaltet wird. Dadurch, dass im Schritt des Veränderns zumindest zwei unterschiedliche Maßnahmen durchgeführt werden, kann die Sendercodesignalstärke effizient und schonend an einen Betauungsgrad des Lichtsenders und/oder Lichtempfängers angepasst werden. Dies kann sich verlängernd auf eine Lebensdauer des Lichtsenders auswirken und/oder einer Funktionsstörung der Lichtübertragungsstrecke entgegenwirken.

Gemäß einer Ausführungsform des vorliegenden Ansatzes kann das Verfahren einen weiteren Schritt des Empfangens eines weiteren Sendercodes umfassen. Hierbei kann der weitere Sendercode ein von dem Lichtsender an den Lichtempfänger gesendetes weiteres Signal repräsentieren. Der weitere Sendercode kann sich dabei von dem im Schritt des Empfangens empfangenen Sendercode unterscheiden. Dadurch, dass sich der Sendercode und der weitere Sendercode voneinander unterscheiden, kann verhindert werden, dass die physikalische Beschaffenheit der Lichtübertragungsstrecke durch ein wiederholtes Übertragen des gleichen Sendercodes beeinflusst wird. Somit können Signalübertragungsfehler vermieden werden.

Gemäß einer Ausführungsform des vorliegenden Ansatzes kann im Schritt des Empfangens als Sendercode ein Binärcode empfangen werden und/oder im Schritt des Einlesens als Empfängercode ein Binärcode eingelesen werden. Unter einem Binärcode kann im Allgemeinen ein Code verstanden werden, mit dem Informationen durch Sequenzen zwei verschiedener Symbole wie etwa 1 und 0 oder wahr und falsch dargestellt werden können. Vorteilhafterweise können Binärcodes mit einfachen und kostengünstigen technischen Mitteln abgebildet und kostengünstig und ressourcenschonend verarbeitet werden.

Gemäß einer Ausführungsform des vorliegenden Ansatzes kann im Schritt des Empfangens ferner zumindest ein zusätzlicher Sendercode empfangen werden. Dabei kann der zumindest eine zusätzliche Sendercode ein von zumindest einem zusätzlichen Lichtsender an zumindest einen zusätzlichen Lichtempfänger gesendetes Signal repräsentieren. Der zumindest eine zusätzliche Lichtsender kann an einem Ende und der zumindest eine zusätzliche Lichtempfänger an einem anderen Ende zumindest einer zusätzlichen Lichtübertragungsstrecke angeordnet sein. Hierbei kann sich der zumindest eine zusätzliche Sendercode von dem Sendercode unterscheiden.

Im Schritt des Einlesens kann ferner zumindest ein zusätzlicher Empfängercode eingelesen werden. Hierbei kann der zumindest eine zusätzliche Empfängercode ein von dem zumindest einen zusätzlichen Lichtempfänger unter Verwendung des zumindest einen zusätzlichen Sendercodes bereitgestelltes Signal repräsentieren.

Im Schritt des Ermittelns kann ferner ein Grad einer Übereinstimmung des zumindest einen zusätzlichen Sendercodes und des zumindest einen zusätzlichen Empfängercodes ermittelt werden, um die Signalübertragungsqualität der zumindest einen zusätzlichen Lichtübertragungsstrecke zu bestimmen.

Durch eine solche zweikanalige Ausführungsform kann mit geringem Kosten- und Materialaufwand eine besonders hohe Zuverlässigkeit des Verfahrens sichergestellt werden. Somit kann das Verfahren auch in Bereichen mit hohen Sicherheitsanforderungen wie etwa dem Fahrzeugbereich angewandt werden.

Indem sich der zumindest eine zusätzliche Sendercode von dem Sendercode unterscheidet, kann erreicht werden, dass der Lichtsender und der zumindest eine zusätzliche Lichtsender nicht gleichzeitig aktiv sind. Dadurch kann eine gegenseitige Funktionsbeeinträchtigung durch Streulicht vermieden werden.

Gemäß einer Ausführungsform des vorliegenden Ansatzes kann im Schritt des Empfangens als zusätzlicher Sendercode ein Code empfangen werden, der einem invertierten Sendercode entspricht. Unter einem invertierten Sendercode kann im Allgemeinen eine logische Umkehrung bzw. Codestellen-weisen Invertierung einer den Sendercode repräsentierenden Codefolge, etwa eines digitalen Codeworts, verstanden werden. Dadurch kann besonders einfach und mit niedrigem Rechenaufwand ein größtmöglicher Unterschied zwischen dem Sendercode und dem zumindest einen zusätzlichen Sendercode hergestellt werden.

Der vorliegende Ansatz schafft ferner eine Vorrichtung zum Bestimmen einer Signalübertragungsqualität einer Lichtübertragungsstrecke, die an ihrem einen Ende einen Lichtsender und an ihrem anderen Ende einen Lichtempfänger aufweist. Die Vorrichtung weist folgende Merkmale auf:
eine Empfangseinheit zum Empfangen eines Sendercodes, wobei der Sendercode ein von dem Lichtsender an den Lichtempfänger gesendetes Signal repräsentiert;
eine Einleseeinheit zum Einlesen eines Empfängercodes, wobei der Empfängercode ein von dem Lichtempfänger unter Verwendung des Sendercodes bereitgestelltes Signal repräsentiert; und
eine Ermittlungseinheit zum Ermitteln der Anzahl der übereinstimmenden Codeabschnitte des Sendercodes und des Empfängercodes, um die Signalübertragungsqualität der Lichtübertragungsstrecke zu bestimmen.

Eine Vorrichtung kann ein elektrisches Gerät sein, das Sensorsignale verarbeitet und in Abhängigkeit davon Steuersignale ausgibt. Die Vorrichtung kann eine oder mehrere geeignete Schnittstellen aufweisen, die hard- und/oder softwaremäßig ausgebildet sein können. Bei einer hardwaremäßigen Ausbildung können die Schnittstellen beispielsweise Teil einer integrierten Schaltung sein, in der Funktionen der Vorrichtung umgesetzt sind. Die Schnittstellen können auch eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Bei der Vorrichtung kann es sich vorzugsweise um eine Einstellvorrichtung handeln, mittels welcher über ein Bedienelement Einstellungen vorgenommen werden. Solche eine Einstellvorrichtung ist beispielsweise ein Gangwahlhebel oder eine Fahrwerkeinstellvorrichtung. Der vorliegende Ansatz schafft ferner eine Einstellvorrichtung, welche eine Vorrichtung zum Durchführen des Verfahrens nach einer der vorstehend beschriebenen Ausführungsformen aufweist. Eine solche Einstellvorrichtung kann beispielsweise eine Einstellvorrichtung zum Einstellen eines Fahrwerks sein. Vorzugsweise schafft der vorliegende Ansatz einen Gangwahlhebel für ein Automatikgetriebe. Ein Gangwahlhebel wird bei Automatikgetrieben üblicherweise dazu verwendet, zwischen verschiedenen Gangwahlstufen wie beispielsweise N für Neutralstufe, D für Vorwärtsfahrstufe bzw. Drive und R für Rückwärtsfahrstufe hin und her zu schalten. Weitere Gangwahlstufen wie P für Parkstufe sind ebenfalls über den Gangwahlhebel anwählbar. Eine Information über die mittels des Gangwahlhebels eingelegte Gangwahlstufe kann mechanisch oder elektronisch wie beispielsweise bei einem Shift-by-wire-Gangwahlsystem erfolgen. Diese Information kann über ein Getriebesteuergerät, ggf. nach Verifikation durch das Getriebesteuergerät an das Kraftfahrzeuggetriebe weitergeleitet werden, um ein der ausgewählten Gangwahlstufe entsprechendes Schalten des Kraftfahrzeuggetriebes zu veranlassen. Bei dem Gangwahlhebel kann es sich vorzugsweise um einen Schalthebel oder einen Drehwahlschalter handeln. Weiter bevorzugt ist der Gangwahlhebel in ein Shift-by-wire-System eingebunden. Der Gangwahlhebel weist eine Vorrichtung zum Durchführen des Verfahrens nach einer der vorstehend beschriebenen Ausführungsformen auf. Ein solcher Gangwahlhebel weist eine hohe Zuverlässigkeit und Präzision auf und kann deutlich kostengünstiger als herkömmliche Gangwahlhebel hergestellt werden.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird anhand der beigefügten Zeichnungen beispielhaft näher erläutert. Es zeigen:
- Fig. 1: eine schematische Darstellung einer Vorrichtung zum Bestimmen einer Signalübertragungsqualität einer Lichtübertragungsstrecke gemäß einem Ausführungsbeispiel der vorliegenden Erfindung;
- Fig. 2: eine schematische Darstellung einer Lichtschrankenanordnung gemäß einem Ausführungsbeispiel der vorliegenden Erfindung;
- Fig. 3: eine Querschnittsdarstellung eines Gangwahlhebels für ein Automatikgetriebe zur Verwendung mit einem Ausführungsbeispiel der vorliegenden Erfindung;
- Fig. 4: eine Querschnittsdarstellung eines Gangwahlhebels für ein Automatikgetriebe zur Verwendung mit einem Ausführungsbeispiel der vorliegenden Erfindung; und
- Fig. 5: ein Ablaufdiagramm eines Verfahrens zum Bestimmen einer Signalübertragungsqualität einer Lichtübertragungsstrecke gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

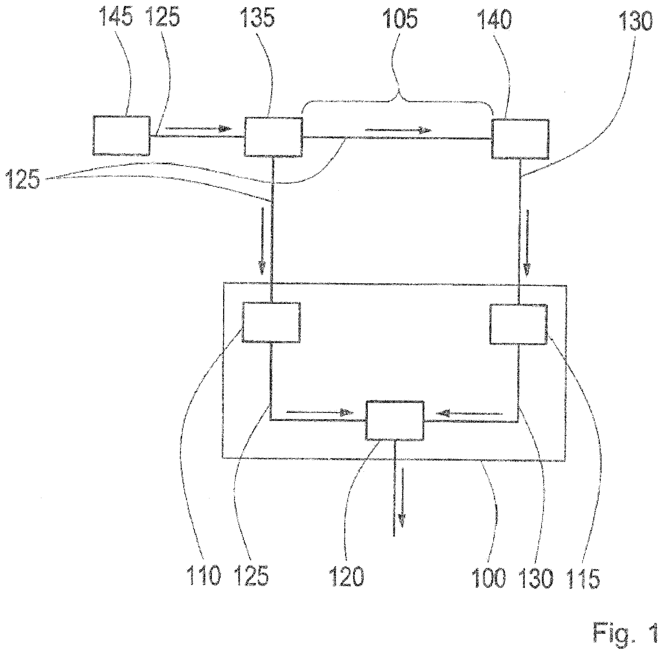

Fig. 1 zeigt eine schematische Darstellung einer Vorrichtung 100 zum Bestimmen einer Signalübertragungsqualität einer Lichtübertragungsstrecke 105 gemäß einem Ausführungsbeispiel der vorliegenden Erfindung. Die Vorrichtung 100 weist eine Empfangseinheit 110, eine Einleseeinheit 115 und eine Ermittlungseinheit 120 auf. Die Empfangseinheit 110 ist ausgebildet, um einen Sendercode 125 zu empfangen. Die Einleseeinheit 115 ist ausgebildet, um einen Empfängercode 130 einzulesen. Die Empfangseinheit 110 und die Einleseeinheit 115 sind je mit der Ermittlungseinheit 120 verbunden. Die Ermittlungseinheit 120 ist ausgebildet, um den Sendercode 125 und den Empfängercode 130 zu empfangen. Ferner ist die Ermittlungseinheit 120 ausgebildet, um einen Grad der Übereinstimmung des Sendercodes 125 und des Empfängercodes 130 zu ermitteln. Anhand des Grads der Übereinstimmung kann eine Signalübertragungsqualität der Lichtübertragungsstrecke 105 bestimmt werden.

Die Empfangseinheit 110 ist über eine Schnittstelle der Vorrichtung 100 mit einem Lichtsender 135 verbunden. Die Einleseeinheit 115 ist über eine weitere Schnittstelle der Vorrichtung 100 mit einem Lichtempfänger 140 verbunden. Der Lichtsender 135 ist an einem Ende der Lichtübertragungsstrecke 105 angeordnet. An einem anderen Ende der Lichtübertragungsstrecke 105 ist der Lichtempfänger 140 angeordnet. Der Lichtsender 135 ist ausgebildet, um den Sendercode 125 über die Lichtübertragungsstrecke 105 an den Lichtempfänger 140 zu senden. Beispielsweise kann es sich bei der Lichtübertragungsstrecke 105 um einen Lichtweg einer Gabellichtschranke oder einer Reflexlichtschranke handeln. Der Lichtsender 135 und der Lichtempfänger 140 können beispielsweise einen gegenseitigen Abstand von 3 mm bis 120 mm aufweisen. Gemäß einem Ausführungsbeispiel der vorliegenden Erfindung können der Lichtsensor 135 und der Lichtempfänger 140 in einem Gangwahlhebel für ein Fahrzeugautomatikgetriebe angeordnet sein. Die Lichtübertragungsstrecke 105 kann hierbei etwa durch einen Dreh- oder Druckknopf des Gangwahlhebels freigegeben oder blockiert werden. Ferner ist der Lichtsender 135 ausgebildet, um den Sendercode 125, beispielsweise in Form eines elektrischen Signals, an die Empfangseinheit 110 zu senden. Der Lichtsender 135 kann beispielsweise ein Rotlicht- oder Infrarotlichtsignal ausgeben, um den Sendercode 125 zu übertragen. Der Lichtempfänger 140 ist ausgebildet, um den Sendercode 125 zu empfangen. Ferner ist der Lichtempfänger 140 ausgebildet, um unter Verwendung des Sendercodes 125 den Empfängercode 130 bereitzustellen. Hierbei repräsentiert der Empfängercode 130 den Sendercode 125, sofern er von dem Lichtempfänger 140 empfangen wurde. Der Lichtempfänger 140 ist zudem ausgebildet, um den Empfängercode 130 in Form eines entsprechenden Signals an die Einleseeinheit 115 zu senden.

Der Sendercode 125 und der Empfängercode 130 können miteinander übereinstimmen oder voneinander abweichen. Beispielsweise können der Sendercode 125 und der Empfängercode 130 dann voneinander abweichen, wenn die Lichtübertragungsstrecke 105 durch unerwünschte Fremdeinflüsse beeinträchtigt ist. Die Lichtübertragungsstrecke 105 kann beispielsweise durch Tautropfen oder Schmutzpartikel, die sich auf dem Lichtsender 135 und/oder dem Lichtempfänger 140 abgelagert haben, beeinträchtigt sein.

Der Sendercode 125 kann optional von einer Codierungseinheit 145 bereitgestellt werden. Die Codierungseinheit 145 kann in Form eines Mikrocontrollers realisiert sein und über eine digitale Schnittstelle wie etwa einem UART (Universal Asynchronous Receiver/Transmitter) mit dem Lichtsender 135 verbunden sein. Gemäß einem Ausführungsbeispiel der vorliegenden Erfindung kann die Codierungseinheit 145 ausgebildet sein, um den Sendercode 125 als Binärcode auszugeben. Der Lichtsender 135 kann ausgebildet sein, um den Sendercode 125 von der Codierungseinheit 145 zu empfangen und den Sendercode 125 in Form eines Lichtsignals an den Lichtempfänger 140 zu senden.

Die Ermittlungseinheit 120 kann ausgebildet sein, um den Grad der Übereinstimmung des Sendercodes 125 und des Empfängercodes 130 in Form eines entsprechenden Signals (in der Fig. 1 mit dem aus der Einheit 120 nach unten weisenden Pfeil dargestellt) an eine zusätzliche Schnittstelle der Vorrichtung 100 auszugeben. Die zusätzliche Schnittstelle kann beispielsweise mit einem Steuergerät (welches in der Fig. 1 nicht dargestellt ist) verbunden sein. Das Steuergerät kann ausgebildet sein, um anhand des Grads der Übereinstimmung die Signalübertragungsqualität der Lichtübertragungsstrecke 105 zu bestimmen. In Abhängigkeit von der Signalübertragungsqualität kann das Steuergerät beispielsweise entsprechende Steuersignale an eine weitere Vorrichtung wie etwa das Automatikgetriebe ausgeben. Denkbar ist ferner, dass die Ermittlungseinheit 120 auch direkt den Grad der Übereinstimmung und hieraus die Signalübertragungsqualität der Lichtübertragungsstrecke 105 bestimmt, welche als entsprechendes Signal dann mit dem aus der Einheit 120 nach unten weisenden Pfeil dargestellt ist.

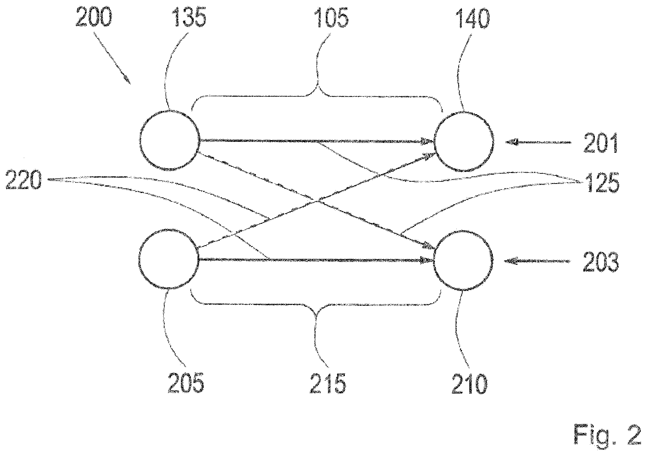

Fig. 2 zeigt eine schematische Darstellung einer Lichtschrankenanordnung 200 gemäß einem Ausführungsbeispiel der vorliegenden Erfindung. Die Lichtschrankenanordnung 200 weist eine erste Lichtschranke 201 und eine zweite Lichtschranke 203 auf. Die erste Lichtschranke 201 weist den Lichtsender 135 als ersten Sender und den Lichtempfänger 140 als ersten Empfänger auf. Die zweite Lichtschranke 203 weist einen zusätzlichen Lichtsender 205 als zweiten Sender und einen zusätzlichen Lichtempfänger 210 als zweiten Empfänger auf. Der Lichtsender 135 und der Lichtempfänger 140 bilden je ein Ende der Lichtübertragungsstrecke 105. Der zusätzliche Lichtsender 205 und der zusätzliche Lichtempfänger 210 bilden je ein Ende einer zusätzlichen Lichtübertragungsstrecke 215. Der Lichtsender 135 ist ausgebildet, um den Sendercode 125 an den Lichtempfänger 140 zu senden. Der zusätzliche Lichtsender 205 ist ausgebildet, um einen zusätzlichen Sendercode 220 an den zusätzlichen Lichtempfänger 210 zu senden. Hierbei kann sich der zusätzliche Sendercode 220 von dem Sendercode 125 unterscheiden. Beispielsweise kann der Sendercode 125 einer digitalen Codefolge "010101" entsprechen. Optional kann der zusätzliche Sendercode 220 eine logische Invertierung des Sendercodes 125 repräsentieren, sodass der zusätzliche Sendercode 220 gemäß dem genannten Beispiel einer digitalen Codefolge "101010" entsprechen kann. Die Lichtschranken 201, 203 können benachbart zueinander angeordnet sein. In diesem Fall kann zwischen den Lichtschranken 201, 203 Crosstalk auftreten. Unter Crosstalk kann im Allgemeinen eine unerwünschte gegenseitige Beeinflussung unabhängiger Signalkanäle verstanden werden. Beispielsweise kann ein den Sendercode 125 tragendes Lichtsignal auf den zusätzlichen Lichtempfänger 210 und/oder ein den zusätzlichen Sendercode 220 tragendes Lichtsignal auf den Lichtempfänger 140 in Form von Streulicht abgestrahlt werden.

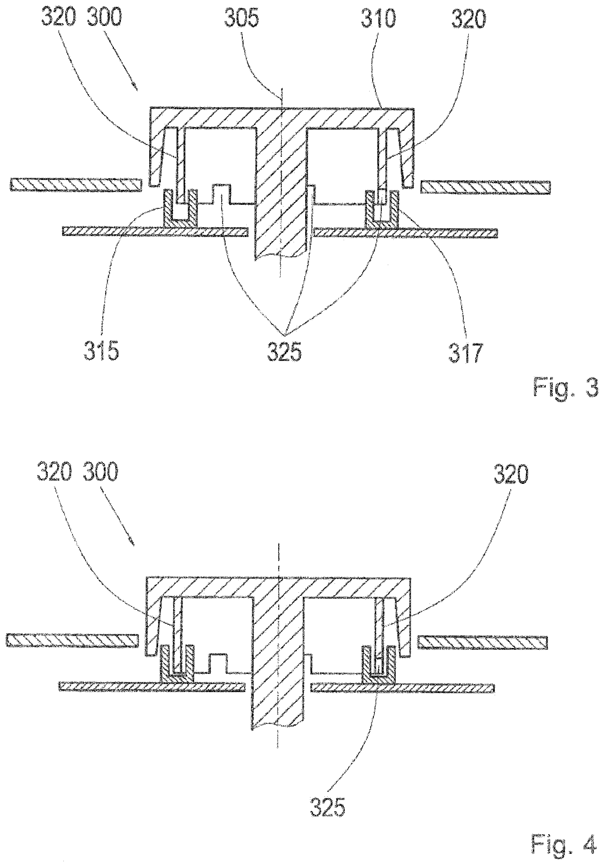

Fig. 3 zeigt eine Querschnittsdarstellung eines Gangwahlhebels 300 für ein Automatikgetriebe zur Verwendung in einem Ausführungsbeispiel der vorliegenden Erfindung. Der Gangwahlhebel 300 ist in Form eines Dreh- und Druckknopfes mit einer zentralen Drehachse 305 ausgeführt. Die Drehachse 305 ist senkrecht zu dem Gangwahlhebel 300 angeordnet. Der Gangwahlhebel 300 kann in eine oder in zwei Richtungen um die Drehachse 305 gedreht werden. Ferner kann der Gangwahlhebel 300 in Richtung der Drehachse 305 hinuntergedrückt werden. Der Gangwahlhebel 300 kann beispielsweise ausgebildet sein, um beim Drücken und/oder Drehen einen Gangwechsel in einem Automatikgetriebe zu bewirken. Fig. 3 zeigt den Gangwahlhebel 300 in einem nicht gedrückten Zustand, der auch als Nominallage bezeichnet werden kann.

Der Gangwahlhebel 300 ist mit einem hohlen Drehkörper 310 vorgesehen. Ferner ist der Gangwahlhebel 300 mit einer ersten Gabellichtschranke 315 und einer zweiten Gabellichtschranke 317 vorgesehen. Die Gabellichtschranken 315, 317 liegen sich gegenüber. Der Drehkörper 310 weist in einem äußeren Randbereich eine Kante 320 auf. Die Kante 320 ist mit zumindest drei Ausnehmungen 325 versehen. Die Kante 320 ist je zwischen einem Lichtsender und einem Lichtempfänger der Gabellichtschranken 315, 317 angeordnet. Bei dem Lichtsender und dem Lichtempfänger der ersten Gabellichtschranke 315 kann es sich beispielsweise um den Lichtsender 135 und den Lichtempfänger 140 handeln, wie in den Figuren 1 und 2 gezeigt. Bei dem Lichtsender und dem Lichtempfänger der zweiten Gabellichtschranke 317 kann es sich beispielsweise um den zusätzlichen Lichtsender 205 und den zusätzlichen Lichtempfänger 210 handeln, wie in Fig. 2 gezeigt. Die Kante 320 mit den Ausnehmungen 325 ist ausgebildet, um beim Drehen und/oder Drücken des Drehkörpers 310 die Lichtübertragungsstrecke der ersten Gabellichtschranke 315 und/oder die zusätzliche Lichtübertragungsstrecke der zweiten Gabellichtschranke 317 freizugeben und/oder zu blockieren. In der in Fig. 3 gezeigten Nominallage des Gangwahlhebels 300 kann die Kante 320 in der ersten Gabellichtschranke 315 angeordnet sein, um die Lichtübertragungsstrecke zumindest teilweise zu blockieren. Es findet dann keine Signalübertragung statt (auch Signal 00 genannt). Hingegen kann in der zweiten Gabellichtschranke 317 eine der Ausnehmungen 325 angeordnet sein, um die zusätzliche Lichtübertragungsstrecke vollständig freizugeben, sodass eine Signalübertragung stattfindet (auch Signal 11 genannt).

Fig. 4 zeigt eine Querschnittsdarstellung eines Gangwahlhebels 300 für ein Automatikgetriebe zur Verwendung in einem Ausführungsbeispiel der vorliegenden Erfindung. Im Unterschied zu Fig. 3 zeigt Fig. 4 den Gangwahlhebel 300 in einem gedrückten Zustand. Im gedrückten Zustand kann die Kante 320 in der ersten Gabellichtschranke 315 angeordnet sein, um die Lichtübertragungsstrecke vollständig zu blockieren. Somit erfolgt wie in der in Fig. 3 gezeigten Nominallage keine Signalübertragung (Signal 00). Hingegen kann in der zweiten Gabellichtschranke 317 die Ausnehmung 325 angeordnet sein, um die zusätzliche Lichtübertragungsstrecke zumindest teilweise zu blockieren. Es findet somit auch in der zweiten Gabellichtschranke 317 keine Signalübertragung statt (Signal 00). Beispielsweise kann durch das Drücken des Gangwahlhebels 300 ein Gangwechsel in dem Automatikgetriebe eingeleitet werden.

Im Folgenden wird ein Ausführungsbeispiel der vorliegenden Erfindung anhand der Figuren 1 bis 4 nochmals mit anderen Worten beschrieben.

Die vorliegende Erfindung schafft ein wirtschaftliches Verfahren zum störunempfindlichen Betrieb einer oder mehrerer Lichtschranken in einer Gangwahlapplikation. Unter einer Lichtschranke kann eine Lichtstrecke mit einem Sender und einem Empfänger verstanden werden, die durch Objekte unterbrochen werden kann. Der Sender kann auch als Lichtsender, der Empfänger auch als Lichtempfänger bezeichnet werden. Die Lichtschranke dient etwa der Detektion von Längs- oder Drehbewegungen. Dabei können kostengünstige Standardkomponenten verwendet werden. Ferner kann das Verfahren unempfindlich gegenüber Fremdeinflüssen sein. Beim Ausfall eines Sensors kann das Verfahren zudem die Verfügbarkeit eines das Verfahren ausführenden Systems gewährleisten. Dies kann beispielsweise durch eine Zweikanaligkeit des Systems erreicht werden.

Bei dem Verfahren kann es sich um ein einfaches Auswerteverfahren handeln, das unter Verwendung einiger weniger in Massenfertigung hergestellter Bauteile, die aufgrund ihres einfachen Designs kostengünstig zu beschaffen sind, realisiert werden kann. Dazu können beispielsweise SMD-Gabellichtschranken (SMD = surface mounted device = oberflächenbefestigtes Bauteil) verwendet werden. Mittels des Auswerteverfahrens kann eine Betriebssicherheit erhöht werden und eine Lichtschranke diagnostizierbar gemacht werden. Damit ist das Auswerteverfahren auch in Sicherheitsanwendungen durchführbar. Um das Auswerteverfahren durchzuführen, kann etwa auf freie Ressourcen in einem Mikrocontroller zurückgegriffen werden, was weitere wirtschaftliche Vorteile bringen kann.

Eine Sicherung gegen Fremdeinwirkung wird durch das Senden eines digitalen Codewortes als Sendercode 125 und den Empfang des Codeworts auf dem gleichen Kanal erreicht. Ein asynchroner UART sendet eine bestimmte Bitfolge an die LED der Lichtschranke, auch Lichtsender 135 genannt. Unter einem UART kann eine Peripherieeinheit in gängigen Mikrocontrollern verstanden werden. Der gekoppelte Fotoempfänger, auch Lichtempfänger 140 genannt, reicht das empfangene Signal in Form eines Empfängercodes 130 an den UART zurück. Der Mikrocontroller, etwa die Ermittlungseinheit 120, vergleicht Sendung und Empfang auf Identität. Ist dies gegeben, kann mit hoher Sicherheit eine unbedämpfte, ordnungsgemäß arbeitende Lichtschranke angenommen werden. Das Codewort kann zyklisch variiert werden. Ferner können verschiedene Kanäle verschiedene Codeworte nutzen. Beispielsweise können die Codeworte invertiert sein. Dadurch sind benachbarte Sender nicht gleichzeitig aktiv, wodurch Streulicht vermieden werden kann. Die Ansteuerung der Lichtschranken durch den Mikrocontroller kann im Interruptbetrieb im Hintergrund ablaufen. Über Flags kann einer Vordergrundanwendung ein entsprechendes Ergebnis mitgeteilt werden.

Um eine Pegelstärke sicherzustellen, kann ein Pegel eines analogen Empfängersignals, etwa des den Empfängercode 130 tragenden Signals, zyklisch gemessen und mit einem Vorgabewert verglichen werden. Fällt der Pegel unter den Vorgabewert, beispielsweise aufgrund einer temporären Betauung des Senders und/oder des Empfängers, so kann eine Sendeleistung erhöht werden. Eine dabei entstehende Abwärme der LED kann zusätzlich zur Reduzierung der Betauung führen. Dies kann in zumindest zwei Stufen erfolgen, beispielsweise durch das Umschalten auf andere Vorwiderstände. Entspricht der Pegel wieder dem Vorgabewert, so kann die Sendeleistung reduziert werden, beispielsweise um den Stromverbrauch zu reduzieren oder die LED nicht dauerhaft zu schädigen, da die Sende-LED gegebenenfalls geringfügig überstromt wird.

Werden zumindest zwei Lichtschranken eingesetzt, so kann auch die Funktionssicherheit in Bezug auf Sicherheitsvorgaben zur Zweikanaligkeit wie beispielsweise ASIL B erfüllt werden. Da preiswerte SMD-Standardkomponenten verwendet werden können, ist eine zweikanalige Ausführung noch in einem vertretbaren Kostenrahmen möglich. Darüber hinaus kann bei der Verwendung von zumindest zwei Empfängern eine Bewegungsrichtung eines Hebels oder eines Drehknopfs erfasst werden, was bei einer kostengünstigen inkrementalen Sensorik wichtig ist.

Da ein Ausfall einer Lichtschranke klar ermittelbar ist, kann über einen zweiten Kanal die Verfügbarkeit des Systems sichergestellt werden. Somit kann etwa auf einen teuren Mehrheitsentscheider verzichtet werden.

Das Verfahren eignet sich prinzipiell für alle Lichtschrankenvarianten wie etwa Gabellichtschranken oder Reflexionslichtschranken. Ferner eignet sich das Verfahren zur Verwendung in Inkremental- und Absolutgebern. Standardbauteile wie Gabellichtschranken können beispielsweise in rotatorischen, linearen oder bahnengeführten Systemen angewandt werden.

Bei mehreren Lichtschranken können jeweils zwei Lichtschranken an einem UART betrieben werden. Dabei kann die erste Lichtschranke normal und die zweite Lichtschranke logisch invertiert betrieben werden, wie in Fig. 2 gezeigt.

In der Regel sind keine zusätzlichen Ressourcen im Mikrocontroller notwendig, da die I/O-Pins ohnehin benötigt werden. Die UARTs sind in aktuellen 32-Bit-ICs vorhanden. Durch eine Interruptausführung kann die Softwarelast im Hintergrund sehr gering gehalten werden.

Das Verfahren kann ausgeführt werden, um neben einer Dreh- und/oder Linearbewegung auch eine Druck- und/oder Kippbewegung zu erkennen. Dazu kann ein Unterbrecherring, etwa der in den Figuren 3 und 4 gezeigte Drehkörper 310 mit der Kante 320, so codiert sein, dass beispielsweise eine Druckbewegung zu einer anderen Unterbrechungscodierung der Gabellichtschranken führt. In Fig. 4 wird beim Hinunterdrücken eines Drehknopfs, auch Gangwahlhebel 300 genannt, eine Unterbrechung aller Lichtschranken, hier Doppelgabellichtschranken, bewirkt. Diese Konstellation kann bei dem in den Figuren 3 und 4 beispielhaft dargestellten System nur auftreten, wenn der Drehknopf gedrückt wird.

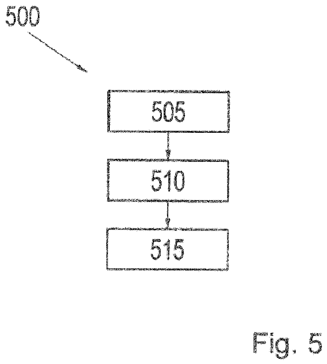

Fig. 5 zeigt eine schematische Darstellung eines Verfahrens 500 zum Bestimmen einer Signalübertragungsqualität einer Lichtübertragungsstrecke gemäß einem Ausführungsbeispiel der vorliegenden Erfindung. Die Lichtübertragungsstrecke weist an ihrem einen Ende einen Lichtsender und an ihrem anderen Ende einen Lichtempfänger auf. In einem ersten Schritt 505 wird ein Sendercode empfangen. Hierbei repräsentiert der Sendercode ein von dem Lichtsender an den Lichtempfänger gesendetes Signal. Hierauf erfolgt ein Schritt 510 des Einlesens eines Empfängercodes. Der Empfängercode repräsentiert dabei ein von dem Lichtempfänger unter Verwendung des Sendercodes bereitgestelltes Signal. Schließlich erfolgt in einem Schritt 515 das Ermitteln eines Grads der Übereinstimmung des Sendercodes und des Empfängercodes, um die Signalübertragungsqualität der Lichtübertragungsstrecke zu bestimmen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### Bezugszeichen

- 100: Vorrichtung zum Bestimmen einer Signalübertragungsqualität einer Lichtübertragungsstrecke
- 105: Lichtübertragungsstrecke
- 110: Empfangseinheit
- 115: Einleseeinheit
- 120: Ermittlungseinheit
- 125: Sendercode
- 130: Empfängercode
- 135: Lichtsender
- 140: Lichtempfänger
- 145: Codierungseinheit
- 200: Lichtschrankenanordnung
- 201: erste Lichtschranke
- 203: zweite Lichtschranke
- 205: zusätzlicher Lichtsender
- 210: zusätzlicher Lichtempfänger
- 215: zusätzliche Lichtübertragungsstrecke
- 220: zusätzlicher Sendercode
- 300: Gangwahlhebel
- 305: Drehachse
- 310: Drehkörper
- 315: erste Gabellichtschranke
- 317: zweite Gabellichtschranke
- 320: Kante
- 325: Ausnehmung
- 500: Verfahren zum Bestimmen einer Signalübertragungsqualität einer Lichtübertragungsstrecke
- 505: Empfangen eines Sendercodes
- 510: Einlesen eines Empfängercodes
- 515: Ermitteln eines Grads der Übereinstimmung des Sendercodes und des Empfängercodes

## Patentansprüche

1. Verfahren (500) für einen Gangwahlhebel (300) für ein Automatikgetriebe, zum Bestimmen einer Signalübertragungsqualität einer Lichtübertragungsstrecke (105), die an ihrem einen Ende einen Lichtsender (135) und an ihrem anderen Ende einen Lichtempfänger (140) aufweist, wobei die Lichtübertragungsstrecke (105) durch den Gangwahlhebel (300) freigegeben und/oder blockiert werden kann und wobei das Verfahren (500) folgende Schritte umfasst:
Empfangen (505) eines Sendercodes (125), wobei der Sendercode (125) ein von dem Lichtsender (135) an den Lichtempfänger (140) gesendetes Signal repräsentiert;
Einlesen (510) eines Empfängercodes (130), wobei der Empfängercode (130) ein von dem Lichtempfänger (140) unter Verwendung des Sendercodes (125) bereitgestelltes Signal repräsentiert; und
Ermitteln (515) der Anzahl der übereinstimmenden Codeabschnitte des Sendercodes (125) und des Empfängercodes (130), um die Signalübertragungsqualität der Lichtübertragungsstrecke (105) zu bestimmen.

2. Verfahren (500) gemäß Anspruch 1, **gekennzeichnet durch** einen Schritt des Messens einer Empfängercodesignalstärke eines den Empfängercode (130) tragenden Signals und einen Schritt des Bestimmens einer Abweichung der Empfängercodesignalstärke von einem vorbestimmten Wert.

3. Verfahren (500) gemäß Anspruch 2, **gekennzeichnet durch** einen Schritt des Veränderns einer Sendercodesignalstärke eines den Sendercode (125) tragenden Signals unter Verwendung der Abweichung der Empfängercodesignalstärke von dem vorbestimmten Wert.

4. Verfahren (500) gemäß Anspruch 3, **dadurch gekennzeichnet, dass** im Schritt des Veränderns zumindest zwei unterschiedliche Maßnahmen durchgeführt werden, um die Sendercodesignalstärke zu verändern.

5. Verfahren (500) gemäß einem der vorangegangenen Ansprüche, **gekennzeichnet durch** einen weiteren Schritt des Empfangens eines weiteren Sendercodes, wobei der weitere Sendercode ein von dem Lichtsender (135) an den Lichtempfänger (140) gesendetes weiteres Signal repräsentiert, wobei der weitere Sendercode sich von dem im Schritt des Empfangens (505) empfangenen Sendercode (125) unterscheidet.

6. Verfahren (500) gemäß einem der vorangegangenen Ansprüche, **dadurch gekennzeichnet, dass** im Schritt des Empfangens (505) als Sendercode (125) ein Binärcode empfangen wird und/oder im Schritt des Einlesens (510) als Empfängercode (130) ein Binärcode eingelesen wird.

7. Verfahren (500) gemäß einem der vorangegangenen Ansprüche, **dadurch gekennzeichnet, dass** im Schritt des Empfangens (505) ferner zumindest ein zusätzlicher Sendercode empfangen wird, wobei der zumindest eine zusätzliche Sendercode ein von zumindest einem zusätzlichen Lichtsender an zumindest einen zusätzlichen Lichtempfänger gesendetes Signal repräsentiert, wobei der zumindest eine zusätzliche Lichtsender an einem Ende und der zumindest eine zusätzliche Lichtempfänger an einem anderen Ende zumindest einer zusätzlichen Lichtübertragungsstrecke angeordnet ist, wobei sich der zumindest eine zusätzliche Sendercode von dem Sendercode (125) unterscheidet,
wobei im Schritt des Einlesens (510) ferner zumindest ein zusätzlicher Empfängercode eingelesen wird, wobei der zumindest eine zusätzliche Empfängercode ein von dem zumindest einen zusätzlichen Lichtempfänger unter Verwendung des zumindest einen zusätzlichen Sendercodes bereitgestelltes Signal repräsentiert, und
wobei im Schritt des Ermittelns (515) ferner ein Grad einer Übereinstimmung des zumindest einen zusätzlichen Sendercodes und des zumindest einen zusätzlichen Empfängercodes ermittelt wird, um die Signalübertragungsqualität der zumindest einen zusätzlichen Lichtübertragungsstrecke zu bestimmen.

8. Verfahren (500) gemäß Anspruch 7, **dadurch gekennzeichnet, dass** im Schritt des Empfangens (505) als zusätzlicher Sendercode ein Code empfangen wird, der einem invertierten Sendercode (125) entspricht.

9. Vorrichtung (100) für einen Gangwahlhebel (300) für ein Automatikgetriebe, zum Bestimmen einer Signalübertragungsqualität einer Lichtübertragungsstrecke (105), die an ihrem einen Ende einen Lichtsender (135) und an ihrem anderen Ende einen Lichtempfänger (140) aufweist, wobei die Lichtübertragungsstrecke (105) durch den Gangwahlhebel (300) freigegeben und/oder blockiert werden kann und wobei die Vorrichtung (100) folgende Merkmale aufweist:
eine Empfangseinheit (110) zum Empfangen eines Sendercodes (125), wobei der Sendercode (125) ein von dem Lichtsender (135) an den Lichtempfänger (140) gesendetes Signal repräsentiert;
eine Einleseeinheit (115) zum Einlesen eines Empfängercodes (130), wobei der Empfängercode (130) ein von dem Lichtempfänger (140) unter Verwendung des Sendercodes (125) bereitgestelltes Signal repräsentiert; und
eine Ermittlungseinheit (120) zum Ermitteln der Anzahl der übereinstimmenden Codeabschnitte des Sendercodes (125) und des Empfängercodes (130), um die Signalübertragungsqualität der Lichtübertragungsstrecke (105) zu bestimmen.

10. Gangwahlhebel (300) für ein Automatikgetriebe, wobei der Gangwahlhebel (300) eine Vorrichtung (100) gemäß Anspruch 9 aufweist.

11. Computerprogrammprodukt mit Programmcode zum Durchführen des Verfahrens (500) nach einem der Ansprüche 1 bis 8, wenn das Programmprodukt auf der Vorrichtung (100) ausgeführt wird.

## Claims

1. Method (500) for a gear selector lever (300) for an automatic transmission for determining a signal transmission quality of a light transmission path (105) which has a light transmitter (135) at its one end and a light receiver (140) at its other end, wherein the light transmission path (105) can be enabled and/or blocked by the gear selector lever (300), and wherein the method (500) comprises the following steps of:
receiving (505) a transmitter code (125), wherein the transmitter code (125) represents a signal transmitted from the light transmitter (135) to the light receiver (140);
reading in (510) a receiver code (130), wherein the receiver code (130) represents a signal provided by the light receiver (140) using the transmitter code (125); and
determining (515) the number of corresponding code sections of the transmitter code (125) and of the receiver code (130) in order to determine the signal transmission quality of the light transmission path (105) .

2. Method (500) according to Claim 1, **characterized by** a step of measuring a receiver code signal strength of a signal carrying the receiver code (130) and a step of determining a deviation of the receiver code signal strength from a predetermined value.

3. Method (500) according to Claim 2, **characterized by** a step of changing a transmitter code signal strength of a signal carrying the transmitter code (125) using the deviation of the receiver code signal strength from the predetermined value.

4. Method (500) according to Claim 3, **characterized in that** at least two different measures are carried out in the changing step in order to change the transmitter code signal strength.

5. Method (500) according to one of the preceding claims, **characterized by** a further step of receiving a further transmitter code, wherein the further transmitter code represents a further signal transmitted from the light transmitter (135) to the light receiver (140), wherein the further transmitter code differs from the transmitter code (125) received in the receiving step (505).

6. Method (500) according to one of the preceding claims, **characterized in that** a binary code is received as the transmitter code (125) in the receiving step (505) and/or a binary code is read in as the receiver code (130) in the reading-in step (510).

7. Method (500) according to one of the preceding claims, **characterized in that** at least one additional transmitter code is also received in the receiving step (505), wherein the at least one additional transmitter code represents a signal transmitted from at least one additional light transmitter to at least one additional light receiver, wherein the at least one additional light transmitter is arranged at one end of at least one additional light transmission path and the at least one additional light receiver is arranged at another end of at least one additional light transmission path, wherein the at least one additional transmitter code differs from the transmitter code (125),
wherein at least one additional receiver code is also read in in the reading-in step (510), wherein the at least one additional receiver code represents a signal provided by the at least one additional light receiver using the at least one additional transmitter code, and
wherein a degree of correspondence between the at least one additional transmitter code and the at least one additional receiver code is also determined in the determining step (515) in order to determine the signal transmission quality of the at least one additional light transmission path.

8. Method (500) according to Claim 7, **characterized in that** a code corresponding to an inverted transmitter code (125) is received as the additional transmitter code in the receiving step (505).

9. Apparatus (100) for a gear selector lever (300) for an automatic transmission for determining a signal transmission quality of a light transmission path (105) which has a light transmitter (135) at its one end and a light receiver (140) at its other end, wherein the light transmission path (105) can be enabled and/or blocked by the gear selector lever (300), and wherein the apparatus (100) has the following features:
a receiving unit (110) for receiving a transmitter code (125), wherein the transmitter code (125) represents a signal transmitted from the light transmitter (135) to the light receiver (140);
a reading-in unit (115) for reading in a receiver code (130), wherein the receiver code (130) represents a signal provided by the light receiver (140) using the transmitter code (125); and
a determination unit (120) for determining the number of corresponding code sections of the transmitter code (125) and of the receiver code (130) in order to determine the signal transmission quality of the light transmission path (105).

10. Gear selector lever (300) for an automatic transmission, wherein the gear selector lever (300) has an apparatus (100) according to Claim 9.

11. Computer program product having program code for carrying out the method (500) according to one of Claims 1 to 8 when the program product is executed on the apparatus (100).

## Revendications

1. Procédé (500) destiné à un levier de sélection de vitesse (300) pour une transmission automatique afin de déterminer une qualité de transmission de signaux d'une voie de transmission de lumière (105), comportant à une de ses extrémités un émetteur de lumière (135) et à son autre extrémité un récepteur de lumière (140), dans lequel la voie de transmission de lumière (105) peut être libérée et/ou bloquée par le levier de sélection de vitesse (300) et dans lequel le procédé (500) comprend les étapes consistant à :
recevoir (505) un code d'émetteur (125), dans lequel le code d'émetteur (125) représente un signal envoyé par l'émetteur de lumière (135) au récepteur de lumière (140) ;
lire (510) un code de récepteur (130), dans lequel le code de récepteur (130) représente un signal produit par le récepteur de lumière (140) à l'aide du code d'émetteur (125) ; et
émettre (515) le nombre de sections de code correspondantes du code d'émetteur (125) et du code de récepteur (130) afin de déterminer la qualité de transmission de signaux de la voie de transmission de lumière (105).

2. Procédé (500) selon la revendication 1, **caractérisé par** une étape consistant à mesurer une intensité de signal de code de récepteur d'un signal transportant le code de récepteur (130) et une étape consistant à déterminer un écart entre l'intensité de signal de code de récepteur et une valeur prédéterminée.

3. Procédé (500) selon la revendication 2, **caractérisé par** une étape consistant à modifier une intensité de signal de code d'émetteur d'un signal transportant le code d'émetteur (125) à l'aide de l'écart entre l'intensité de signal de code de récepteur et la valeur prédéterminée.

4. Procédé (500) selon la revendication 3, **caractérisé en ce que**, lors de l'étape de modification, au moins deux opérations différentes sont effectuées pour modifier l'intensité de signal de code d'émetteur.

5. Procédé (500) selon l'une des revendications précédentes, **caractérisé par** une étape supplémentaire consistant à recevoir un autre code d'émetteur, dans lequel l'autre code d'émetteur représente un autre signal envoyé par l'émetteur de lumière (135) au récepteur de lumière (140), dans lequel l'autre code d'émetteur est différent du code d'émetteur (125) reçu lors de l'étape de réception (505).

6. Procédé (500) selon l'une des revendications précédentes, **caractérisé en ce que**, lors de l'étape de réception (505), un code binaire est reçu en tant que code d'émetteur (125) et/ou **en ce que**, lors de l'étape de lecture (510), un code binaire est lu en tant que code de récepteur (130).

7. Procédé (500) selon l'une des revendications précédentes, **caractérisé en ce que**, lors de l'étape de réception (505), au moins un code d'émetteur supplémentaire est reçu, dans lequel ledit au moins un code d'émetteur supplémentaire représente un signal envoyé par au moins un émetteur de lumière supplémentaire à au moins un récepteur de lumière supplémentaire, dans lequel l'au moins un émetteur de lumière supplémentaire est disposé à une extrémité et l'au moins un récepteur de lumière supplémentaire est disposé à une autre extrémité d'au moins une voie de transmission de lumière supplémentaire, dans lequel l'au moins un code d'émetteur supplémentaire est différent du code d'émetteur (125),
dans lequel, lors de l'étape de lecture (510), au moins un code de récepteur supplémentaire est lu, dans lequel l'au moins un code de récepteur supplémentaire représente un signal produit par au moins un récepteur de lumière supplémentaire au moyen de l'au moins un code d'émetteur supplémentaire, et
dans lequel, lors de l'étape de détermination (515), un degré de correspondance entre l'au moins un code d'émetteur supplémentaire et l'au moins un code de récepteur supplémentaire est en outre déterminé afin de déterminer la qualité de transmission de signaux de l'au moins une voie de transmission de lumière supplémentaire.

8. Procédé (500) selon la revendication 7, **caractérisé en ce que**, lors de l'étape de réception (505), un code correspondant à un code d'émetteur (125) inversé est reçu en tant que code d'émetteur supplémentaire.

9. Dispositif (100) destiné à un levier de sélection de vitesse (300) pour une transmission automatique afin de déterminer une qualité de transmission de signaux d'une voie de transmission de lumière (105), comportant à une de ses extrémités un émetteur de lumière (135) et à son autre extrémité un récepteur de lumière (140), dans lequel la voie de transmission de lumière (105) peut être libérée et/ou bloquée par le levier de sélection de vitesse (300) et dans lequel le dispositif (100) présente les éléments caractéristiques suivants :
une unité de réception (110) destinée à recevoir un code d'émetteur (125), dans lequel le code d'émetteur (125) représente un signal envoyé par l'émetteur de lumière (135) au récepteur de lumière (140) ;
une unité de lecture (115) destinée à lire un code de récepteur (130), dans lequel le code de récepteur (130) représente un signal produit par le récepteur de lumière (140) à l'aide du code d'émetteur (125) ; et
une unité de détermination (120) destinée à déterminer le nombre de sections de code correspondantes du code d'émetteur (125) et du code de récepteur (130) afin de déterminer la qualité de transmission de signaux de la voie de transmission de lumière (105).

10. Levier de sélection de vitesse (300) pour une transmission automatique, dans lequel le levier de sélection de vitesse (300) comporte un dispositif (100) selon la revendication 9.

11. Produit de programme d'ordinateur comportant un code de programme destiné à mettre en oeuvre le procédé (500) selon l'une des revendications 1 à 8 lorsque le produit de programme est exécuté sur le dispositif (100).
